# EUROPÄISCHE PATENTSCHRIFT

(11) **EP 3 513 007 B1**
(45) Veröffentlichungstag und Bekanntmachung des Hinweises auf die Patenterteilung: **30.08.2023**
(21) Anmeldenummer: 17787327.0
(22) Anmeldetag: 07.09.2017
(51) Int. Cl.: E03C 1/08, F16L 15/00

(54) **SANITÄRE AUSLAUFVORRICHTUNG**
SANITARY OUTLET DEVICE
DISPOSITIF D'ÉCOULEMENT SANITAIRE

(30) Priorität: 15.09.2016 DE 202016005646 U
(43) Veröffentlichungstag der Anmeldung: 24.07.2019
(73) Patentinhaber: Neoperl GmbH, 79379 Müllheim (DE)
(72) Erfinder: BIRMELIN, David, 79379 Müllheim (DE)
(74) Vertreter: Mertzlufft-Paufler, Cornelius
(86) Internationale Anmeldenummer: PCT/EP2017/001063
(87) Internationale Veröffentlichungsnummer: WO 2018/050274

(56) Entgegenhaltungen:
- EP-A2- 2 025 820
- DE-A1-102010 023 665
- US-A- 2 746 486
- US-A- 2 787 452
- US-A- 3 298 614
- US-A- 3 672 574
- US-A- 3 827 636
- US-A- 4 313 564
- US-A- 4 534 513

## Beschreibung

Die Erfindung betrifft eine sanitäre Auslaufvorrichtung mit einem Gehäuse, das an einem zuströmseitigen Ende eines Strömungsweges eine Armaturenaufnahme mit einem Gewinde aufweist, wobei ein Gegengewinde eines Armaturenauslaufs mit dem Gewinde verschraubbar ist, wobei an einem abströmseitigen Ende des Gewindes eine Dichtung ausgebildet ist, mit welcher der Strömungsweg an einem Übergang von einem eingeschraubten Armaturenauslauf zum Gehäuse nach außen abdichtbar ist, wobei die Dichtung am Übergang eine durch strömendes Wasser im Strömungsweg benetzbare Innenfläche bildet. Derartige Auslaufvorrichtungen sind bekannt und werden mit einem Armaturenauslauf verschraubt, um eine gewünschte Funktionalität im Strömungsweg bereitzustellen. Dies kann beispielsweise eine Strahlformung oder eine Mengenreglung sein. Hierbei ist es üblich geworden, die Auslaufvorrichtung gegen den Armaturenauslauf abzudichten. Somit kann verhindert werden, dass Wasser aus dem Strömungsweg austritt, wenn durch die gewünschte Funktionalität ein Rückstau gebildet ist. Diese Abdichtung erfolgt bisher durch einen Gummiring, der auf einen Flansch in der Armaturenaufnahme aufgelegt wird.

Aus der Druckschrift US 3 827 636 A ist vorbekannt ein im wesentlichen leckfreier Belüfter für eine Wasserleitung, umfassend ein Körperelement, das durch Gewindegänge mit der Leitung verbunden ist, eine mit Öffnungen versehene Membran, die quer von dem Körperelement am stromaufwärts gelegenen Ende des Körperelements getragen wird und ein stromaufwärts gelegenes Lippensegment aufweist, das als ein Vorsprung ausgebildet ist, der im Wesentlichen senkrecht zur gesamten Umfangsfläche der Membran verläuft, wobei die Leitung ein inneres Umfangswandelement aufweist, das kontinuierlich in die obere Umfangsfläche des Lippensegments eingreift, um eine im Wesentlichen kontinuierliche Barriere gegen das Austreten von Wasser durch die Gewinde zu bilden, die das Körperelement mit der Leitung verbinden, wobei die Öffnungen der Membran getrennte und unterschiedliche, im Wesentlichen parallele Ströme bilden, die aus der Membran austreten, das Körperelement Öffnungen zum Einführen von Luft in das Körperelement hat, die mit den Wasserströmen gemischt werden soll, die die Öffnungen der Membran durchqueren, und eine Vielzahl von beabstandeten Sieben, die in der Nähe des stromabwärts gelegenen Endes des Körperelements gehalten werden und durch die das Gemisch aus Luft und Wasser übertragen und dann aus dem Körperelement abgeleitet wird, die Öffnungen in dem Körperelement im Wesentlichen parallel zueinander sind und sich von dem stromabwärtigen Ende des Körperelements zu dem Raum zwischen der Membran und den Sieben erstrecken, wobei die Membran Umfangsschlitze darin aufweist, um Wasser, das an dem Lippensegment vorbei in den Hauptstrom des Körperelements leckt, bei reduziertem Druck abzuleiten.

Aus der Druckschrift US 4 534 513 A ist ein Belüfter vorbekannt, der in einen Wasserauslauf einsetzbar ist und Folgendes umfasst: ein rohrförmiges Element mit einem ersten rohrförmigen Abschnitt, der ein Standard-Außengewinde aufweist; ein gewindeloses zweites rohrförmiges Teilstück; und eine ringförmige Leiste, die sich zwischen der Außenwand des zweiten Teilstücks und der Außenwand des ersten Teilstücks erstreckt; ein ringförmiges Dichtungselement; eine Strahlformungseinrichtung zum Formen des Wasserstroms in Strahlen, wobei die Strahlformungseinrichtung von dem rohrförmigen Element umgeben ist; wobei das ringförmige Dichtungselement eine Dichtungsgrenzfläche zwischen der ringförmigen Leiste des rohrförmigen Elements und der ringförmigen Oberfläche des Auslaufs aufweist, wenn der Belüfter in einen Wasserauslauf eingeschraubt ist; und wobei der Belüfter zumindest teilweise verdeckt ist, wenn der Belüfter in den Auslauf eingeschraubt ist.

Der Erfindung liegt die Aufgabe zugrunde, eine sanitäre Auslaufvorrichtung mit verbesserten Gebrauchseigenschaften zu schaffen.

Zur Lösung der genannten Aufgabe sind erfindungsgemäß die Merkmale des Anspruchs 1 vorgesehen. Insbesondere wird somit zur Lösung der genannten Aufgabe bei einer sanitären Auslaufvorrichtung der eingangs beschriebenen Art erfindungsgemäß vorgeschlagen, dass die Innenfläche gummifrei ausgebildet ist. Von Vorteil ist dabei, dass ein Kontakt zwischen Gummi und Wasser, das im Strömungsweg strömt, vermeidbar ist. Da Gummi zur Besiedlung mit Mikroorganismen neigt, ist so ein Produkt bereitstellbar, dass über einen verlängerten Zeitraum frei von Mikroorganismen bleibt oder zumindest nur in geringem Ausmaß von Mikroorganismen besiedelt wird. Dies verbessert die Gebrauchseigenschaften beträchtlich.

Erfindungsgemäß ist vorgesehen, dass die Dichtung einen in der Armaturenaufnahme umlaufenden Vorsprung hat, der an einer dem Strömungsweg zugewandten Seite die gummifreie Innenfläche bildet. Somit ist die gummifreie Innenfläche durch ein gummifreies Material des Vorsprungs und insbesondere des Gehäuses bildbar, wobei der Vorsprung an dem Gehäuse angeformt und mit diesem einstückig verbunden ist.

Der Vorsprung steht entgegen einer durch das Gewinde vorgegebenen Verschraubrichtung an dem Gehäuse in die Armaturenaufnahme hervor. Somit ist konstruktiv einfach erreichbar, dass der Vorsprung zum Armaturenauslauf abschließt. Die Verschraubrichtung kann hierbei beispielsweise als diejenige Richtung mit demjenigen Richtungssinn charakterisiert werden, entlang welcher und in welchem sich der Armaturenauslauf an die Auslaufvorrichtung beim Verschrauben annähert.

Der Vorsprung ist an dem Gehäuse angeformt und mit diesem einstückig verbunden. Somit sind eine Teileanzahl und ein Montageaufwand reduzierbar.

Dies ist einfach als Spritzgussteil, zum Beispiel aus Kunststoff, oder als Drehteil, zum Beispiel aus Metall, fertigbar. Bei einer vorteilhaften Ausgestaltung kann vorgesehen sein, dass der Vorsprung, radial innerhalb des Gewindes ausgebildet ist. Somit ist die Abdichtung zwischen dem Gehäuse und dem Armaturenauslauf innerhalb des Gewindes ausbildbar. Der Vorsprung kann hierbei axial versetzt zu dem Gewinde, aber auf einem kleineren Radius als dieses angeordnet sein. Der Vorsprung kann hierbei auch axial auf gleicher Höhe wie das Gewinde ausgebildet sein, beispielsweise wenn das Gewinde ein Gegengewinde ist und/oder wenn der Vorsprung innenseitig in das Gewinde hinein ragt.

Alternativ oder zusätzlich kann der Vorsprung radial beabstandet zu dem Gewinde ausgebildet sein. Somit ist ein Platz zur Aufnahme des Armaturenauslaufs geschaffen.

Bei einer vorteilhaften Ausgestaltung kann vorgesehen sein, dass der Vorsprung aus einem verformbaren Material gefertigt ist.

Bevorzugt ist der Vorsprung aus vorzugsweise thermoplastischem, besonders bevorzugt hochmolekular thermoplastischem Kunststoff gefertigt. Somit ist ein einfach deformierbarer und/oder günstig herstellbarer Vorsprung beschrieben. Ein Vorsprung aus Kunststoff ist insbesondere einfach an einem Gehäuse aus demselben Kunststoff anformbar. Besonders geeignet ist hier POM (Polyoxymethylen, auch Polyacetal, Polyformaldehyd oder Acetal genannt). Hierbei kann POM als ein hochmolekularer thermoplastischer Kunststoff charakterisiert werden.

Bei einer vorteilhaften Ausgestaltung kann vorgesehen sein, dass der Vorsprung ein entgegen einer durch das Gewinde vorgegebenen Verschraubrichtung verjüngendes Querschnittsprofil aufweist. Somit ist erreichbar, dass der Vorsprung zu seinem freien Ende hin im Querschnitt spitz zuläuft. Der Vorsprung ist daher an seinem freien Ende, das einen Anschlag für einen eingeschraubten Armaturenauslauf darstellen kann, leicht deformierbar. Somit ist ein dichtes Anliegen des (deformierten) Vorsprungs an dem Armaturenauslauf erreichbar. Dichtringe aus Gummi sind somit verzichtbar.

Erfindungsgemäß ist vorgesehen, dass der umlaufende Vorsprung eine entgegen der Verschraubrichtung orientierte Kontaktfläche, die einen Anschlag für einen eingeschraubten Armaturenauslauf bildet, aufweist. Es ist somit eine Abdichtung eines Übergangs zwischen dem Vorsprung und einem eingeschraubten Armaturenauslauf schaffbar. Es ist somit ein flächiges Anliegen am Armaturenauslauf erreichbar. Dies ist besonders vorteilhaft für die Variante mit einem Dichtring, da so ein Zutritt von fließendem Wasser zu dem aus Sicht des Wassers hinter dem Vorsprung liegenden Dichtring erschwert oder verhindert ist.

Bei einer vorteilhaften Ausgestaltung kann vorgesehen sein, dass das Gewinde ein Verschrauben eines Armaturenauslaufs über ein zuströmseitiges Ende des Vorsprungs hinaus erlaubt. Somit ist ein Spielraum geschaffen, um den Armaturenauslauf fest an den Vorsprung pressen zu können. Dies verbessert die Abdichtung des Strömungsweges an dieser Stelle.

Erfindungsgemäß ist vorgesehen, dass der Vorsprung einen Anschlag für ein Verschrauben, insbesondere das bereits erwähnte Verschrauben, eines Armaturenauslaufs bildet. Somit kann der eingeschraubte Armaturenauslauf flächig und dicht an den Vorsprung angelegt werden.

Erfindungsgemäß ist ferner vorgesehen, dass der Vorsprung eine in der Armaturenaufnahme umlaufende Nut zum Strömungsweg begrenzt. Somit ist ein Dichtring, beispielsweise ein Gummiring, einlegbar. Dieser Gummiring ist in der Nut versenkbar, um einen Kontakt mit Wasser im Strömungsweg möglichst auszuschließen.

Ferner ist vorgesehen, dass die Nut entgegen einer durch das Gewinde vorgegebenen Verschraubrichtung geöffnet ist. Somit ist der Gummiring durch die Armaturenaufnahme hindurch einlegbar.

Erfindungsgemäß ist in die umlaufende Nut ein Gummiring eingelegt. Durch den Gummiring ist eine zusätzliche Abdichtung gegen ein Auslaufen von Wasser aufgrund eines hohen Rückstaudruckes bildbar. Eine zusätzliche Abdichtung durch den Vorsprung und den eingeschraubten Armaturenauslauf kann helfen, einen Rückfluss von kontaminiertem Wasser in den Strömungsweg zu be- oder verhindern.

Erfindungsgemäß kann der Gummiring in entspanntem Zustand entgegen der Verschraubrichtung aus der Nut hervorstehen. Der Gummiring ist somit durch den eingeschraubten Armaturenauslauf deformierbar, um eine besonders gute Abdichtung zu erreichen.

Alternativ oder zusätzlich kann erfindungsgemäß vorgesehen sein, dass die Nut weniger tief als zu einer vollständigen Aufnahme des Gummirings nötig ausgebildet ist. Eine axiale Beaufschlagung eines eingelegten Gummirings ist somit durch den Armaturenauslauf einfach erreichbar.

Die Nut ist so dimensioniert, dass der Gummiring in einem verpressten Zustand ohne Überstand aufnehmbar ist. Somit ist vermeidbar, dass der Gummiring ein unmittelbares Anlegen des Armaturenauflaufs an den Vorsprung verhindert.

Bei einer vorteilhaften Ausgestaltung kann vorgesehen sein, dass der Gummiring ein unrundes oder ein rundes Querschnittsprofil aufweist. Das unrunde Profil kann beispielsweise rechteckig, dreieckig, ohne oder mit Dichtlippe, beispielsweise als Quad-Profil (doppeltwirkende Vierlippendichtung), oder auf andere Weise ausgebildet sein. Ein rechteckiges Querschnittsprofil hat den Vorteil einer preisgünstigen Fertigung aus Stangenmaterial. Zusätzlich ist bei einem rechteckigen Profil ein flächiges Anliegen an dem Armaturenauslauf erreichbar. Dichtlippen oder Quad-Profile erreichen eine besonders gute Abdichtung. Ein rundes Querschnittsprofil ist beispielsweise durch einen O-Ring erreichbar.

Bei einer vorteilhaften Ausgestaltung kann vorgesehen sein, dass ein Volumen der Nut ein Volumen des Gummirings übersteigt. Somit ist durch das von der Nut abgegrenzte oder umschlossene Volumen Platz bereitstellbar, in den der eingelegte Gummiring im beaufschlagten Zustand verpressbar ist, ohne das der beispielsweise im Wesentlichen inkompressible Gummiring über einen Rand der Nut hinausragt. Ein direkter Kontakt mit fließendem Wasser kann somit vermieden werden.

Bei einer vorteilhaften Ausgestaltung kann vorgesehen sein, dass das Gehäuse zumindest an der Armaturenaufnahme aus Metall gefertigt ist. Somit ist ein mechanisch stabiles Gehäuse ausbildbar. Bevorzugt ist der Vorsprung hierbei ebenfalls aus Metall gefertigt, beispielsweise in einem gemeinsamen Bearbeitungsverfahren mit dem übrigen Gehäuse.

Eine bevorzugte Anwendung der Erfindung ergibt sich, wenn die sanitäre Auslaufvorrichtung ein Hygienestrahlformer oder Hygienestrahlregler ist. Bakterielle Beläge im Strömungsweg sind durch die erfindungsgemäß gummifreie Ausbildung einer Begrenzung des Strömungswegs vermeidbar.

Bei einer vorteilhaften Ausgestaltung kann vorgesehen sein, dass das Gehäuse abströmseitig zu der gummifreien Innenfläche in eine sich aufweitende Strahlformeraufnahme übergeht, in die ein Strahlformer herausnehmbar eingesetzt ist. Von Vorteil ist dabei, dass eine auswechselbare Funktionalität im Strömungsweg bereitstellbar ist.

Hierbei kann vorgesehen sein, dass der Strahlformer entgegen einer Strömungsrichtung des Strömungswegs herausnehmbar eingesetzt ist. Somit ist einfach erreichbar, dass der Strahlformer herausnehmbar ist, ohne dass das Gehäuse vom Armaturenauslauf entfernt werden muss.

Alternativ oder zusätzlich kann vorgesehen sein, dass der Strahlformer entgegen der durch das Gewinde vorgegebenen Verschraubrichtung herausnehmbar eingesetzt ist. Somit ist einfach erreichbar, dass der Strahlformer in einer Verlängerung des Armaturenauslaufs angeordnet ist.

Bei einer vorteilhaften Ausgestaltung kann vorgesehen sein, dass der Strahlformer zumindest an seinem zuströmseitigen Ende in eingesetztem Zustand durch die Strahlformeraufnahme verformt ist. Somit ist ein dichter Abschluss zwischen der Strahlformeraufnahme und dem Strahlfomer erreichbar. Ein Austritt von Wasser aus dem Strömungsweg neben dem Strahlformer ist somit vermeidbar.

Bei einer vorteilhaften Ausgestaltung kann vorgesehen sein, dass der Strahlformer an seinem zuströmseitigen Ende eine an der Strahlformeraufnahme anliegende Dichtlippe aufweist. Somit ist die Abdichtung an dieser Stelle nochmals verbesserbar. Der Strahlformer kann somit als beträchtliches Strömungshindernis mit einem großen Strömungswiderstand ausgebildet werden, ohne das die Auslaufvorrichtung seitlich undicht wird.

Bei einer vorteilhaften Ausgestaltung kann vorgesehen sein, dass der Strahlformer aus Kunststoff gefertigt ist. Es ist somit ein preisgünstiger Strahlformer mit einer komplexen Oberflächen- und/oder Innenstruktur schaffbar.

Alternativ oder zusätzlich zu der Dichtlippe kann vorgesehen sein, dass der Strahlformer einen an der Strahlformeraufnahme anliegenden Dichtring aufweist. Somit ist eine einfach herstellbare und gut montierbare Abdichtung zwischen dem Strahlformer und dem Gehäuse herstellbar. Hierbei kann der Dichtring, vorzugsweise über eine Schulter oder wenigstens einen radial abstehenden Vorsprung, einseitig (für ein Einschieben in die oder ein Herausziehen aus der Strahlformeraufnahme mit dem Strahlformer) oder, vorzugsweise über zwei gegeneinander gerichtete Schultern oder wenigstens zwei radial abstehende, voneinander axial beabstandete und/oder den Dichtring zwischen sich aufnehmende, Vorsprünge, beidseitig (für ein Einschieben in die und ein Herausziehen aus der Strahlformeraufnahme mit dem Strahlformer) axial gehaltenen sein. Von Vorteil ist dabei, dass ein Auswechseln des Dichtrings mit dem Strahlformer erfolgt. Der Dichtring muss somit geringere Hygieneanforderungen erfüllen als die zuvor beschriebene Dichtung. Beispielsweise kann der Dichtring auch dann aus Gummi gefertigt sein, wenn er im Gebrauch mit Wasser in Kontakt kommt.

Besonders günstig ist es, wenn dem Dichtring eine an dem Strahlformer angeformte Dichtlippe, beispielsweise wie bereits beschrieben, vorgelagert ist. Somit sind die Vorteile einer Dichtlippe, nämlich insbesondere die hygienische Unbedenklichkeit, mit den Vorteilen eines Dichtrings, nämlich insbesondere die erhöhte Dichtigkeit, kombinierbar.

Die Erfindung betrifft also eine sanitäre Auslaufvorrichtung mit einem Gehäuse, das an einem zuströmseitigen Ende eines Strömungsweges eine Armaturenaufnahme mit einem Gewinde aufweist, wobei ein Gegengewinde eines Armaturenauslaufs mit dem Gewinde verschraubbar ist. Dieses Verschrauben kann beispielsweise ein Einschrauben oder ein Aufschrauben sein An einem abströmseitigen Ende des Gewindes ist eine Dichtung ausgebildet, mit welcher der Strömungsweg des durch einen Strömungskanal der sanitären Auslaufvorrichtung strömenden Wassers an einem Übergang von einem eingeschraubten Armaturenauslauf zum Gehäuse nach außen abdichtbar ist. Die Dichtung bildet am Übergang eine durch strömendes Wasser im Strömungsweg benetzbare Innenfläche, die gummifrei ausgebildet ist.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: eine in einer längsgeschnittenen Ansicht dargestellte spezifische Ausführungsform einer erfindungsgemäßen sanitären Auslaufvorrichtung, die mit einem Armaturenauslauf verschraubbar ist,
- Fig. 2: die sanitäre Auslaufvorrichtung aus Figur 1 in einer Seitenansicht,
- Fig. 3: die sanitäre Auslaufvorrichtung aus den Figuren 1 und 2 in perspektivischer Ansicht, wobei ein abströmseitiges Ende der sanitären Auslaufvorrichtung zum Betrachter gedreht ist,
- Fig. 4: die sanitäre Auslaufvorrichtung aus den Figuren 1 bis 3 in einer perspektivischen Ansicht, wobei ein zuströmseitiges Ende der sanitären Auslaufvorrichtung zum Betrachter gedreht ist,
- Fig. 5: eine Explosionszeichnung einer erfindungsgemäßen sanitären Auslaufvorrichtung mit einem Strahlformer,
- Fig. 6: eine Ausführungsform einer sanitäre Auslaufvorrichtung mit einem Strahlformer in einer Demontagestellung, wobei die sanitäre Auslaufvorrichtung an einem Gegengewinde eines Armaturenauslaufs montierbar ist, und wobei der Betrachter in Strömungsrichtung von oben auf die sanitäre Auslaufvorrichtung blickt,
- Fig. 7: die sanitäre Auslaufvorrichtung aus Figur 6 in Demontagestellung dargestellt als Längsschnitt, wobei der Schnitt durch die senkrechte, gestrichelte Linie A-A aus Figur 6 angedeutet ist,
- Fig. 8: die sanitäre Auslaufvorrichtung aus den Figuren 6 und 7 dargestellt als Längsschnitt, wobei der Schnitt durch die schräge, gestrichelte Linie B-B aus Figur 6 angedeutet ist,
- Fig. 9: die sanitäre Auslaufvorrichtung aus den Figuren 6 bis 8 in Montagestellung, wobei die sanitäre Auslaufvorrichtung an einem Gegengewinde eines Armaturenauslaufs montiert ist, und wobei der Betrachter in Strömungsrichtung von oben auf die sanitäre Auslaufvorrichtung blickt,
- Fig. 10: die sanitäre Auslaufvorrichtung aus Figur 9 in Montagestellung dargestellt als Längsschnitt, wobei der Schnitt durch die senkrechte gestrichelte Linie C-C in Figur 9 angedeutet ist, und wobei der Strahlformer über zwei Rastnasen in einer dafür vorgesehenen Ausnehmung am Außenumfang des Gehäuses eingerastet ist,
- Fig. 11: die sanitäre Auslaufvorrichtung aus den Figuren 9 und 10 in Montagestellung dargestellt als Längsschnitt, wobei der Schnitt durch die schräge gestrichelte Linie D-D aus Figur 9 angedeutet ist,
- Fig. 12: eine weitere spezifische Ausführungsform einer erfindungsgemäßen sanitären Auslaufvorrichtung dargestellt als Längsschnitt, wobei in ein Gewinde einer Armaturenaufnahme ein Gegengewinde eines Armaturenauslaufs teilweise eingeschraubt ist, wobei ein an einem Gehäuse ausgebildeter Vorsprung ein entgegen einer durch das Gewinde vorgegebenen Verschraubrichtung verjüngendes Querschnittsprofil aufweist,
- Fig. 13: die sanitäre Auslaufvorrichtung aus Figur 12 in Montagestellung dargestellt als Längsschnitt, wobei durch den mittels des Armaturenauslaufs deformierten Vorsprung ein Anschlag für den in das Gewinde eingeschraubten Armaturenauslauf ausgebildet ist, der einen Übergang vom Gehäuse zum Armaturenauslauf abdichtet,
- Fig. 14: eine weitere erfindungsgemäße sanitäre Auslaufvorrichtung ohne Strahlformer, die auf ein Außengwinde eines Armaturenauslaufs aufgeschraubt ist, in einer Schnittdarstellung,
- Fig. 15: die Auslaufvorrichtung nach Fig. 14 mit Strahlformer in unterschiedlichen Ansichten (im Uhrzeigersinn von rechts oben: dreidimensionale Schrägansicht auf die Zuströmseite, dreidimensionale Schrägansicht auf die Abströmseite, Schnittansicht entlang E-E, Ansicht von unten auf die Abströmseite, Schnittansicht entlang F-F),
- Fig. 16: eine weitere erfindungsgemäße sanitäre Auslaufvorrichtung in vom Armaturenauslauf abgenommener Stellung und
- Fig. 17: eine Detailvergrößerung aus Fig. 16.

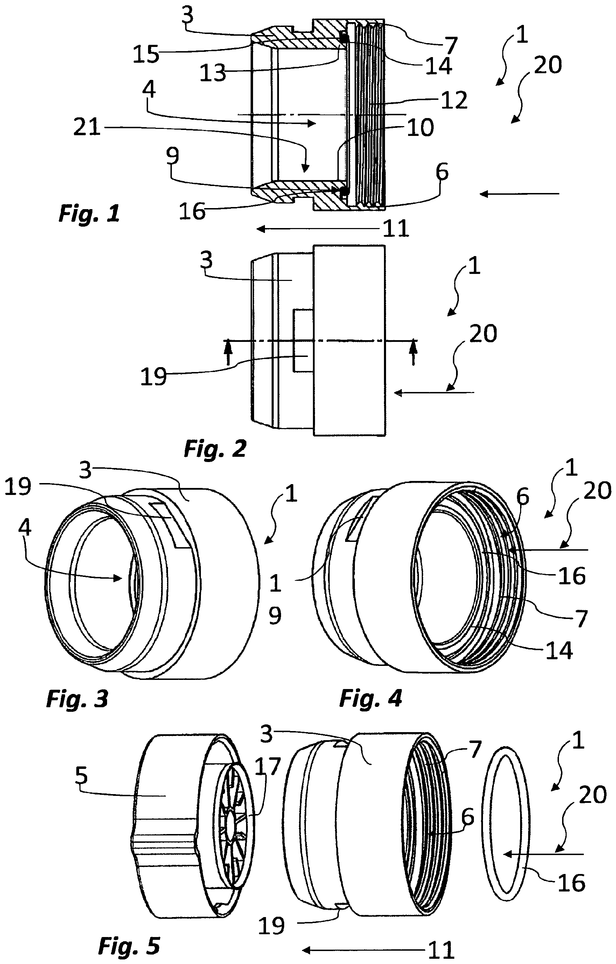

In den Figuren 1 bis 11 ist eine im Ganzen als 1 bezeichnete sanitäre Auslaufvorrichtung in verschiedenen Ansichten dargestellt. Hierbei sind zeigen die Figuren 1 bis 4 die Auslaufvorrichtung 1 ohne eingesetzten Strahlformer 5.

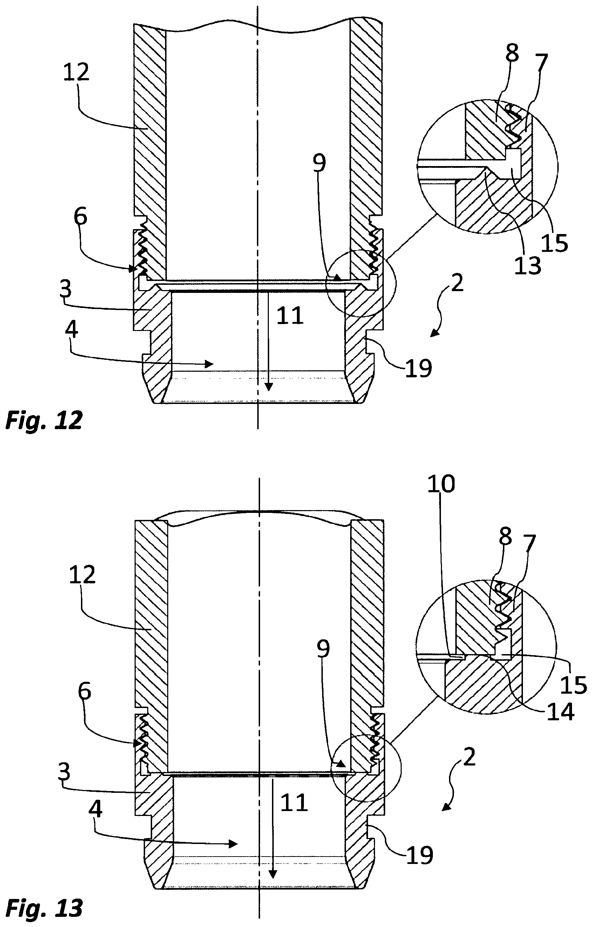

In den Figuren 12 und 13 ist eine weitere Ausführungsform, die im Ganzen als 2 bezeichnet ist, dargestellt. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 11 gelten daher zu den Figuren 12 und 13 entsprechend.

Die erfindungsgemäßen Ausführungsformen der sanitären Auslaufvorrichtung 1 und 2, wie sie in den Figuren 1 bis 13 dargestellt sind, weisen jeweils ein Gehäuse 3 auf, an welchem an einem zuströmseitigen Ende eine Armaturenaufnahme 6 mit einem Gewinde 7 ausgestaltet ist. Mit dem Gewinde 7 ist ein Armaturenauslauf 12 mit seinem Gegengewinde 8 verschraubbar oder verschraubt. An einem abströmseitigen Ende des Gewindes 7 ist eine Dichtung 9 ausgestaltet, durch welche der Strömungsweg 11 an einem Übergang von dem eingeschraubten Armaturenauslauf 12 zum Gehäuse 3 nach außen hin abdichtbar oder abgedichtet ist.

Im vorliegenden Ausführungsbeispiel ist das Gewinde 7 als Innengewinde und das Gegengewinde 8 als Außengewinde ausgebildet.

Die Dichtung 9 weist einen umlaufenden Vorsprung 13 auf, welcher an dem Gehäuse 3, vom Gewinde 7 radial nach innen beabstandet ausgestaltet ist. Der Vorsprung 13 ist in der Armaturenaufnahme 6 entgegen der durch das Gewinde 7 vorgegebenen Verschraubrichtung 20 hervorstehend ausgestaltet.

Die Verschraubrichtung 20, die durch das Gewinde 7 vorgegeben ist, entspricht bei der dargestellten Ausgestaltungsform der sanitären Auslaufvorrichtung 1 und 2 jeweils einer Strömungsrichtung des Strömungsweges 11.

Durch den in die Armaturenaufnahme 6 hervorstehenden Vorsprung 13 ist eine am Übergang des eingeschraubten Armaturenauslaufs 12 zum Gehäuse 3 gummifreie Innenfläche 10 ausgebildet. Diese gummifreie Innenfläche 10 kann mit durch die sanitäre Auslaufvorrichtung 1, 2 im Strömungsweg 11 strömendem Wasser in Verbindung kommen. Da sie gummifrei ist, neigt sie nicht zu einer Besiedlung von durch das Wasser mitgeführten Mikroorganismen, wie beispielsweise bei herkömmlicherweise verwendeten, freiliegenden Gummiteilen.

Durch den Vorsprung 13 ist in der Armaturenaufnahme 6 eine umlaufende Nut 15 zum Strömungsweg 11 des durchströmenden Wassers begrenzt. Eine Nutöffnung der Nut 15 weist dabei entgegen einer durch das Gewinde 7 vorgegebenen Verschraubrichtung 20.

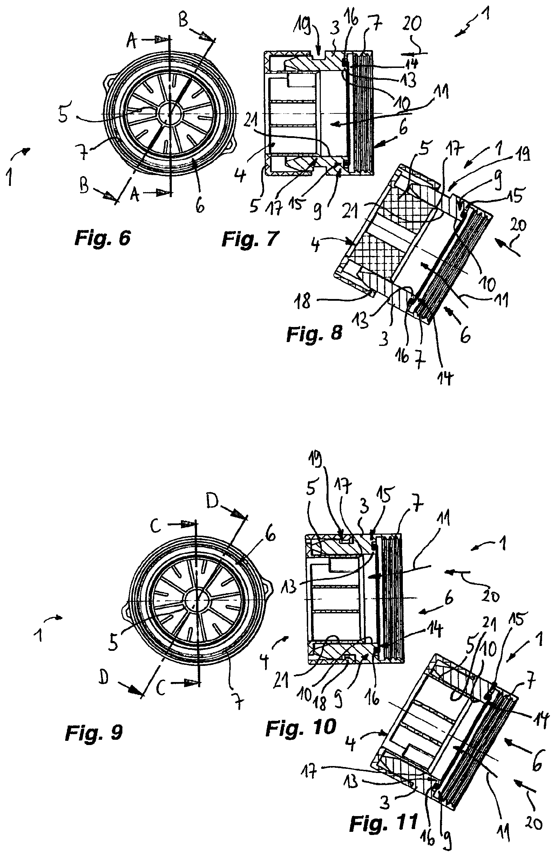

Wie in den Figuren 1, 7, 8, 10 und 11 dargestellt, ist bei der sanitären Auslaufvorrichtung 1 in die umlaufende Nut 15 ein Gummiring 16 eingelegt oder einlegbar. In entspanntem Zustand, wie in den Figuren 7 und 8 zu sehen ist, steht der Gummiring 16 entgegen der Verschraubrichtung 20 aus der Nut 15 hervor. Im montierten Zustand der sanitären Auslaufvorrichtung 1 durch Verschraubung des Gewindes 7 mit dem Gegengewinde 8 des Armaturenauslaufs 12 ist der Gummiring 16 derart von einem umlaufenden Rand des Armaturenauslaufs 12 beaufschlagt, dass er in die Nut 15 hineingedrückt und verpresst ist. Die Dichtung 9 dichtet somit einen Übergang von dem eingeschraubten Armaturenauslauf 12 zum Gehäuse 3 nach außen hin ab. Dabei wird vermieden, dass durchströmendes Wasser mit dem Gummiring 16 der Dichtung 9 in Kontakt tritt. Dies hat den Vorteil, dass sich keine oder weniger Mikroorganismen an dem griffigen Gummi ansiedeln können, sodass die erfindungsgemäße sanitäre Auslaufvorrichtung 1 verbesserte Hygieneeigenschaften als herkömmliche Auslaufvorrichtungen hat. Daher ist es besonders vorteilhaft, wenn der Gummiring 16 in einem verpressten Zustand ohne Überstand in die Nut 15 aufnehmbar ist. Dies erleichtert zudem die Montage der sanitären Auslaufvorrichtung 1 an der Auslaufarmatur 12, da der in der Nut 15 aufgenommene Gummiring 16 ein unmittelbares Anlegen des Armaturenauslaufs 12 an den Vorsprung 13 nicht verhindert.

Durch den Vorsprung 13 ist eine entgegen der Verschraubrichtung 20 orientierte Kontaktfläche 14 ausgestaltet. Die Kontaktfläche 14 bildet einen Anschlag für einen eingeschraubten Armaturenauslauf 12, der die Kontaktfläche 14 des Vorsprungs 13 in Montagestellung, das heißt wenn die sanitäre Auslaufvorrichtung 1, 2 über ihre Armaturenaufnahme 6 an dem Gegengewinde 8 des Armaturenauslaufs 12 montiert ist, beaufschlagt. Es ist somit bereits eine Abdichtung eines Übergangs zwischen dem Vorsprung 13 und einem eingeschraubten Armaturenauslauf 12 einrichtbar. Mittels des zuvor genannten Gummirings 16 wird in Ergänzung dazu eine noch bessere Abdichtung erreicht.

Alternativ oder ergänzend ist es denkbar, dass der Rand des Armaturenauslaufs 12 in Montagestellung der sanitären Auslaufvorrichtung 1 zumindest teilweise in die Nut 15 des Gehäuses 3 hineinragen kann.

Der Gummiring 16 ist als O-Ring ausgestaltet und weist ein rundes Querschnittsprofil auf. Es ist ebenso denkbar, dass der Gummiring 16 ein anderes, insbesondere ein rechteckiges Querschnittsprofil aufweist.

Eine Breite der Nut 15 ist, wie in den Figuren 1, 7, 8, 10 und 11 zu sehen, breiter als der Querschnitt des Gummirings 16 ausgestaltet. Hierdurch wird erreicht, dass ein Volumen, das die Nut 15 zur Aufnahme des Gummirings 16 bereitstellt, das Volumen des einzulegenden Gummirings 16 übersteigt. So ist im entspannten Zustand des Gummirings 16 nicht die ganze Nut 15 durch den Gummiring 16 ausgefüllt. Somit ist in der Nut 15 noch freies Volumen verfügbar, in das der eingelegte Gummiring 16 im beaufschlagten Zustand verpressbar ist.

Das Gehäuse 3 ist zumindest an der Armaturenaufnahme 6, häufig sogar einstückig, aus Metall hergestellt.

Die in den Figuren 12 und 13 dargestellte Ausführungsform der sanitären Auslaufvorrichtung 2 weist einen sich entgegen der Strömungsrichtung des Strömungsweges 11 verjüngenden Vorsprung 13 auf, der im vorliegenden Fall zu seinem freien Ende spitz zulaufend ist. In Figur 12 ist die sanitäre Auslaufvorrichtung 2 noch nicht fest über das Gewinde 7 ihrer Armaturenaufnahme 6 mit dem Gegengewinde 8 des Armaturenauslaufs 12 verschraubt, sodass zwischen der sanitären Auslaufvorrichtung 2 und dem Armaturenauslauf 12 ein kleiner Spalt klafft.

Die Dichtung 9 der sanitären Auslaufvorrichtung 2 ist dadurch hergestellt, dass das Gegengewinde 8 des Armaturenauslaufs 12 vollständig mit dem Gewinde 7 der Armaturenaufnahme 6 am Gehäuse 3 verschraubt wird oder verschraubbar ist, wobei das Gewinde 7 dabei derart ausgestaltet ist, dass ein Verschrauben des Armaturenauslaufs 12 über ein zuströmseitiges Ende des Vorsprungs 13 hinaus möglich ist. Dadurch ist der Vorsprung 13 bei der Ausgestaltungsform der sanitären Auslaufvorrichtung 2 aus den Figuren 12 und 13 durch eine Verschraubung der Armaturenaufnahme 6 mit dem Armaturenauslauf 12 deformierbar. Die Dichtung 9 der sanitären Auslaufvorrichtung 2 kann daher gänzlich ohne Gummiteile ausgestaltet sein. Bereits das dichte Anliegen des deformierten Vorsprungs 13 am Armaturenauslauf 12 bietet eine gute Abdichtung des Übergangs zwischen Gehäuse 3 und Armaturenauslauf 12. Dies verbessert die Hygieneeigenschaften der sanitären Auslaufvorrichtung 2 erheblich.

In Figur 13 ist die sanitäre Auslaufvorrichtung 2 in Montagestellung dargestellt, wobei der Vorsprung 13 durch den Armaturenauslauf 12 verpresst ist und so einen Anschlag mit einer Kontaktfläche 14 für den Armaturenauslauf 12 bildet, wodurch der Strömungsweg 11 am Übergang vom Armaturenauslauf 12 zum Gehäuse 3 abgedichtet ist.

Der Vorsprung 13 der sanitären Auslaufvorrichtung 1, 2 kann aus einem verformbaren Material hergestellt sein. Vorzugsweise ist der Vorsprung 13 aus einem thermoplastischen Kunststoff, insbesondere aus POM (Polyoxymethylen, auch Polyacetal, Polyformaldehyd oder Acetal genannt), gefertigt. Dies hat den Vorteil, dass zusätzliche Dichtmittel, insbesondere aus Gummi, unnötig sind. Alternativ kann der Vorsprung auch aus einem verformbaren Metall, beispielsweise aus Messing- und/oder einer Bronze-Legierung, gefertigt sein. Die Verformbarkeit hat insgesamt den Vorteil, dass sich der Vorsprung dichtend an eine möglicherweise unebene Armatur anlegen kann, ohne dass ein Gummiring nötig ist.

Die sanitäre Auslaufvorrichtung 1, 2 weist eine durch das Gehäuse 3 ausgebildete, sich aufweitende Strahlformeraufnahme 4 auf, in welche ein Strahlformer 5 einsetzbar ist. Der Strahlformer 5 ist dabei entgegen der Strömungsrichtung des Strömungsweges 11 des durchströmenden Wassers in das Gehäuse 3 einsetzbar und am Gehäuse 3 fixierbar. Der Strahlformer 5 kann entfernt werden, ohne dass das Gehäuse 3 vom Armaturenauslauf 12 abgenommen werden muss. Die Strahlformeraufnahme 4 weitet sich am abströmseitigen Ende Gehäuses 3 auf, sodass ein Einsetzen des Strahlformers 5 vereinfacht ist.

In den Figuren 5 bis 11 ist eine Ausgestaltung der sanitären Auslaufvorrichtung 1 dargestellt, die einen Strahlformer 5 aufweist. Der Strahlformer 5 ist entgegen der Strömungsrichtung des Strömungswegs 11 herausnehmbar in die Strahlformeraufnahme 4 eingesetzt. Der Strahlformer 5 weist eine Dichtlippe 17 auf, die im Montagezustand der sanitären Auslaufvorrichtung 1 an einer Innenwand 21 der Strahlformeraufnahme 4 anliegt. Die Dichtlippe 17 ist dabei an einem zuströmseitigen Ende des Strahlformers 5 angeordnet. Die Dichtlippe 17 dichtet den Übergang von der Strahlformeraufnahme 4 des Gehäuses 3 zum Strahlformer 5, insbesondere zu einem Durchströmkanal des Strahlformers 5, ab. Durch die Ausgestaltung der erfindungsgemäßen Auslaufvorrichtung 1, 2 mit einem Strahlformer 5, der eine Dichtlippe 17 beispielsweise aus Kunststoff aufweist, kann auf zusätzliche Gummidichtungen 16 verzichtet werden. Mikroorganismen können sich schlechter auf einer mit durchströmenden Wasser in Berührung kommenden gummifreien Oberfläche der sanitären Auslaufvorrichtung 1, 2 ansiedeln als bei konventionellen sanitären Auslaufvorrichtungen, die abdichtende Gummiteile aufweisen. Somit sind die Gebrauchseigenschaften, insbesondere die Hygieneeigenschaften, der Auslaufvorrichtungen 1, 2 verbessert.

In den Figuren 6 bis 8 ist der Strahlformer 5 nicht am Gehäuse 3 fixiert, sondern in einer Demontagestellung gezeigt. Der Strahlformer 5 weist zur Fixierung am Gehäuse 3 zumindest eine nur teilweise umlaufende und nach innen gerichtete Rastnase 18, vorzugsweise mehrere, insbesondere zwei, Rastnasen 18, auf, die an zumindest einer Einrastausnehmung 19 am Außenumfang des Gehäuses 3 durch eine relative Verdrehung des Strahlformers 5 zum Gehäuse 3 einrastbar ist.

In den Figuren 9 bis 11 ist die sanitäre Auslaufvorrichtung 1 in Montagestellung dargestellt, wobei der Strahlformer 5 über seine zumindest eine Rastnase 18 in der zumindest einen Einrastausnehmung 19 am Gehäuse 3 eingerastet ist. Durch die in Montagestellung in die Einrastausnehmung 19 eingreifende Rastnase 18 des Strahlformers 5 ist der Strahlformer 5 zugfest am Gehäuse 3 fixiert. Die Situation gemäß den Figuren 9 bis 11 ergibt sich aus der Situation gemäß den Figuren 6 bis 8 dadurch, dass der Strahlformer 6 um seine Achse um einen Winkel von 90° gedreht wird.

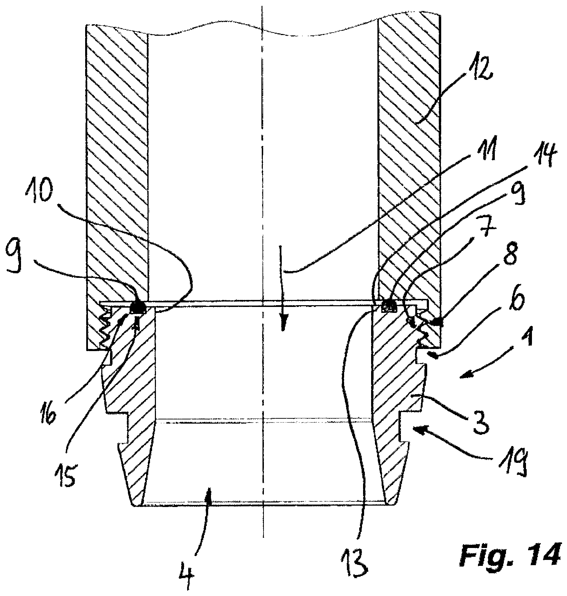

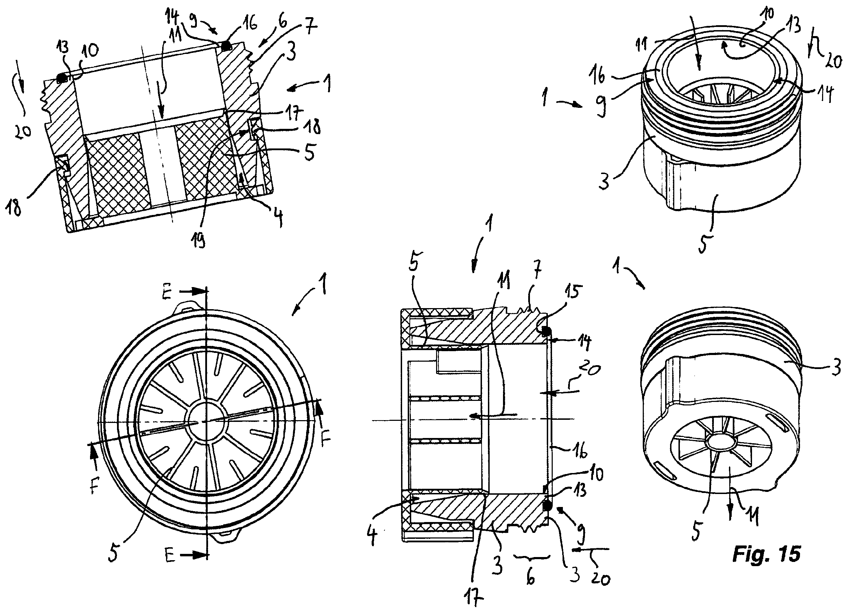

Die Figuren 14 und 15 zeigen eine weitere erfindungsgemäße Ausführungsform einer sanitären Auslaufvorrichtung 1. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den vorangehenden Ausführungsbeispielen gelten daher zu Figur 14 und 15 entsprechend.

Das Ausführungsbeispiel nach den Figuren 14 und 15 unterscheidet sich von den vorangehenden dadurch, dass das Gewinde 7 ein Außengewinde ist, das auf ein Außengewinde als Gegengewinde 8 eines Armaturenauslaufs 12 aufschraubbar ist. Diese Konstellation ist beispielweise bei Armaturen anzutreffen, die an Badewannen eingesetzt werden und/oder die einen größeren Öffnungsdurchmesser des Armaturenauslaufs 12 aufweisen.

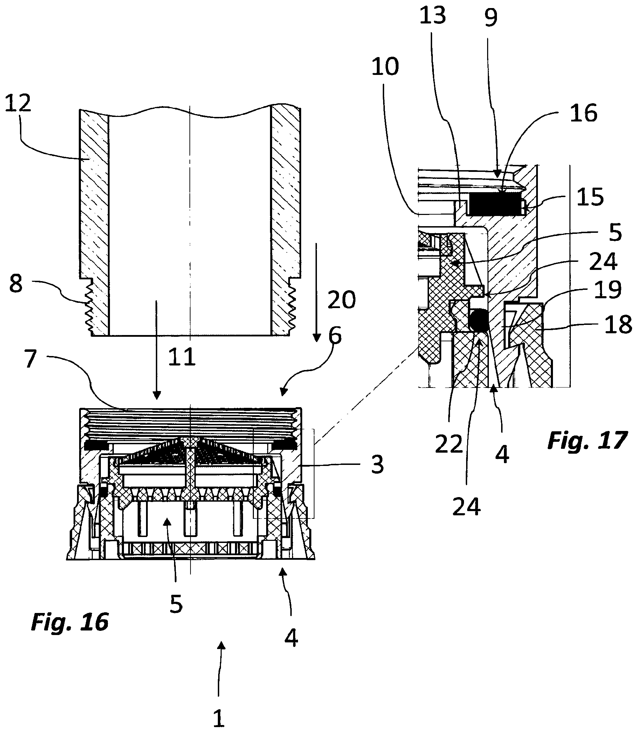

Die Figuren 16 und 17 zeigen ein weiteres erfindungsgemäßes Ausführungsbeispiel. Funktional und/oder konstruktiv zu den vorangegangenen Ausführungsbeispielen gleichartige oder identische Bauteile oder Funktionseinheiten sind mit denselben Bezugszeichen bezeichnet und nicht noch einmal gesondert beschrieben. Die Ausführungen zu den Figuren 1 bis 15 gelten daher zu den Figuren 16 und 17 entsprechend.

Das Ausführungsbeispiel gemäß Figur 16 und 17 unterscheidet sich von den vorangegangenen Ausführungsbeispielen dadurch, dass statt der Lippe 21 ein Dichtring 22, hier beispielhaft ein O-Ring, eingesetzt ist. Die Verwendung eines Dichtringes 22 aus Gummi ist hier unter Hygienegesichtspunkten weniger bedenklich, da das Dichtring 22 mit dem Strahlformer 5 regelmäßig ausgetauscht wird. Hierzu ist der Dichtring 22 axial beidseits durch jeweils eine Schulter 23, 24 auf dem Strahlformer 5 gehalten, so dass er mit dem Strahlformer 5 in die Strahlformeraufnahme 4 eingeschoben und aus dieser herausgezogen werden kann.

### Bezugszeichenliste

- 1: sanitäre Auslaufvorrichtung
- 2: sanitäre Auslaufvorrichtung
- 3: Gehäuse
- 4: Strahlformeraufnahme
- 5: Strahlformer
- 6: Armaturenaufnahme
- 7: Gewinde
- 8: Gegengewinde eines Armaturenauslaufs
- 9: Dichtung
- 10: Innenfläche
- 11: Strömungsweg
- 12: Armaturenauslauf
- 13: Vorsprung
- 14: Kontaktfläche
- 15: Nut
- 16: Gummiring
- 17: Dichtlippe
- 18: Rastnase
- 19: Einrastausnehmung
- 20: Verschraubrichtung
- 21: Innenwand
- 22: Dichtring
- 23: Schulter
- 24: Schulter

## Patentansprüche

1. Sanitäre Auslaufvorrichtung (1, 2) mit einem Gehäuse (3), das an einem zuströmseitigen Ende eines Strömungsweges (11) eine Armaturenaufnahme (6) mit einem Gewinde (7) aufweist, wobei ein Gegengewinde (8) eines Armaturenauslaufs (12) mit dem Gewinde (7) verschraubbar ist, wobei zuströmseitig an der Auslaufvorrichtung (1, 2) eine Dichtung (9) ausgebildet ist, mit welcher der Strömungsweg (11) an einem Übergang von einem eingeschraubten Armaturenauslauf (12) zum Gehäuse (3) nach außen abdichtbar ist, wobei die Dichtung (9) am Übergang eine durch strömendes Wasser im Strömungsweg (11) benetzbare Innenfläche (10) bildet, wobei die Innenfläche (10) gummifrei ausgebildet ist, wobei die Dichtung (9) einen in der Armaturenaufnahme (6) umlaufenden Vorsprung (13) hat, der an einer dem Strömungsweg (11) zugewandten Seite die gummifreie Innenfläche (10) bildet, wobei der Vorsprung (13) an dem Gehäuse (3) angeformt und mit diesem einstückig verbunden ist, und wobei der Vorsprung (13) eine entgegen der Verschraubrichtung (20) orientierte Kontaktfläche aufweist, die einen Anschlag für den eingeschraubten Armaturenauslauf bildet, **dadurch gekennzeichnet, dass** der Vorsprung (13) eine in der Armaturenaufnahme (6) umlaufende Nut (15) zum Strömungsweg (11) begrenzt, wobei die Nut (15) entgegen einer durch das Gewinde (7) vorgegebenen Verschraubrichtung (20) geöffnet ist, dass in die umlaufende Nut (15) ein Gummiring (16) eingelegt ist, dass der Gummiring (16) in entspanntem Zustand entgegen einer Verschraubrichtung (20) aus der Nut (15) hervorsteht und/oder die Nut (15) weniger tief als zu einer vollständigen Aufnahme des Gummirings (16) nötig ausgebildet ist, und dass die Nut (15) so dimensioniert ist, dass der Gummiring (16) in einem verpressten Zustand ohne Überstand aufnehmbar ist.

2. Sanitäre Auslaufvorrichtung (1, 2) nach Anspruch 1, **dadurch gekennzeichnet, dass** der Vorsprung (13) aus einem verformbaren Material gefertigt ist.

3. Sanitäre Auslaufvorrichtung (1, 2) nach einem der voranstehenden Ansprüche, **dadurch gekennzeichnet, dass** der in der Armaturenaufnahme (6) umlaufende Vorsprung (13) radial innerhalb des Gewindes (7) und/oder radial beabstandet zu dem Gewinde (7) ausgebildet ist.

4. Sanitäre Auslaufvorrichtung (1, 2) nach einem der voranstehenden Ansprüche, **dadurch gekennzeichnet, dass** der Vorsprung (13) aus Kunststoff gefertigt ist.

5. Sanitäre Auslaufvorrichtung (1, 2) nach einem der voranstehenden Ansprüche, **dadurch gekennzeichnet, dass** der Vorsprung (13) ein entgegen einer durch das Gewinde (7) vorgegebenen Verschraubrichtung (20) verjüngendes Querschnittsprofil aufweist.

6. Sanitäre Auslaufvorrichtung (1, 2) nach einem der voranstehenden Ansprüche, **dadurch gekennzeichnet, dass** das Gewinde (7) ein Verschrauben eines Armaturenauslaufs (12) über ein zuströmseitiges Ende des Vorsprungs (13) hinaus erlaubt und/oder dass der Vorsprung (13) einen Anschlag für das oder ein Verschrauben eines Armaturenauslaufs (12) bildet.

7. Sanitäre Auslaufvorrichtung (1, 2) nach einem der voranstehenden Ansprüche, **dadurch gekennzeichnet, dass** der Gummiring (16) ein unrundes oder ein rundes Querschnittsprofil aufweist.

8. Sanitäre Auslaufvorrichtung (1, 2) nach einem der voranstehenden Ansprüche, **dadurch gekennzeichnet, dass** ein Volumen einer oder der Nut (15) ein Volumen des Gummirings (16) übersteigt.

9. Sanitäre Auslaufvorrichtung (1, 2) nach einem der voranstehenden Ansprüche, **dadurch gekennzeichnet, dass** das Gehäuse (3) zumindest an der Armaturenaufnahme (6) aus Metall gefertigt ist.

10. Sanitäre Auslaufvorrichtung (1, 2) nach einem der voranstehenden Ansprüche, **dadurch gekennzeichnet, dass** das Gehäuse (3) abströmseitig zu der gummifreien Innenfläche (10) in eine sich aufweitende Strahlformeraufnahme (4) übergeht, in die ein Strahlformer (5) herausnehmbar eingesetzt ist.

11. Sanitäre Auslaufvorrichtung (1, 2) nach einem der voranstehenden Ansprüche, **dadurch gekennzeichnet, dass** der Strahlformer (5) zumindest an seinem zuströmseitigen Ende in eingesetztem Zustand durch die Strahlformeraufnahme (4) verformt ist und/oder dass der Strahlformer (5) an seinem zuströmseitigen Ende eine an der Strahlformeraufnahme (4) anliegende Dichtlippe (17) und/oder einen an der Strahlformeraufnahme (4) anliegenden Dichtring (22) aufweist.

12. Sanitäre Auslaufvorrichtung (1, 2) nach einem der voranstehenden Ansprüche, **dadurch gekennzeichnet, dass** der Strahlformer (5) aus Kunststoff gefertigt ist.

## Claims

1. Sanitary outlet device (1, 2) having a housing (3) which, at an inflow-side end of a flow path (11), has a fitting receptacle (6) with a thread (7), wherein a counterpart thread (8) of a fitting outlet (12) is able to be screwed together with the thread (7), wherein, on the inflow side of the outlet device (1, 2), there is formed a seal (9) by way of which the flow path (11) is able to be sealed off from the outside at a transition from a screwed-in fitting outlet (12) to the housing (3), wherein, at the transition, the seal (9) forms an inner surface (10) which is able to be wetted by flowing water in the flow path (11), wherein the inner surface (10) is of rubber-free form, wherein the seal (9) has a projection (13) which extends in the fitting receptacle (6) in an encircling manner and which forms on a side facing towards the flow path (11) the rubber-free inner surface (10), wherein the projection (13) is formed on the housing (3) and is connected in one piece thereto, and wherein the projection (13) has a contact surface which is oriented counter to the screwing direction (20) and which forms a stop for the screwed-in fitting outlet, **characterized in that** the projection (13) delimits with respect to the flow path (11) a groove (15) which extends in the fitting receptacle (6) in an encircling manner, wherein the groove (15) is open counter to a screwing direction (20) predefined by the thread (7), **in that** a rubber ring (16) is placed into the encircling groove (15), **in that**, in an unloaded state, the rubber ring (16) projects from the groove (15) counter to a screwing direction (20) and/or the groove (15) is formed to be less deep than is necessary for completely receiving the rubber ring (16), and **in that** the groove (15) is dimensioned in such a way that, in a compressed state, the rubber ring (16) is able to be received without any overhang.

2. Sanitary outlet device (1, 2) according to Claim 1, **characterized in that** the projection (13) is manufactured from a deformable material.

3. Sanitary outlet device (1, 2) according to either of the preceding claims, **characterized in that** the projection (13) extending in the fitting receptacle (6) in an encircling manner is formed radially within the thread (7) and/or radially spaced apart from the thread (7).

4. Sanitary outlet device (1, 2) according to one of the preceding claims, **characterized in that** the projection (13) is manufactured from plastic.

5. Sanitary outlet device (1, 2) according to one of the preceding claims, **characterized in that** the projection (13) has a cross-sectional profile which narrows counter to a screwing direction (20) predefined by the thread (7).

6. Sanitary outlet device (1, 2) according to one of the preceding claims, **characterized in that** the thread (7) permits a screw connection of a fitting outlet (12) beyond an inflow-side end of the projection (13), and/or **in that** the projection (13) forms a stop for the or a screw connection of a fitting outlet (12).

7. Sanitary outlet device (1, 2) according to one of the preceding claims, **characterized in that** the rubber ring (16) has a non-round or a round cross-sectional profile.

8. Sanitary outlet device (1, 2) according to one of the preceding claims, **characterized in that** a volume of a or the groove (15) exceeds a volume of the rubber ring (16).

9. Sanitary outlet device (1, 2) according to one of the preceding claims, **characterized in that** the housing (3) is manufactured from metal at least at the fitting receptacle (6).

10. Sanitary outlet device (1, 2) according to one of the preceding claims, **characterized in that** the housing (3) transitions into a widening jet-former receptacle (4) on the outflow side with respect to the rubber-free inner surface (10), into which jet-former receptacle a jet former (5) is removably inserted.

11. Sanitary outlet device (1, 2) according to one of the preceding claims, **characterized in that**, in an inserted state, the jet former (5) is deformed at least at its inflow-side end by the jet-former receptacle (4), and/or **in that**, at its inflow-side end, the jet former (5) has a sealing lip (17) which bears against the jet-former receptacle (4) and/or has a sealing ring (22) which bears against the jet-former receptacle (4).

12. Sanitary outlet device (1, 2) according to one of the preceding claims, **characterized in that** the jet former (5) is manufactured from plastic.

## Revendications

1. Dispositif d'écoulement sanitaire (1, 2) avec un boîtier (3) qui présente à une extrémité amont d'un chemin d'écoulement (11) une entrée de robinet (6) avec un filetage (7), un contre-filetage (8) d'une sortie de robinet (12) pouvant être vissé avec le filetage (7), du côté amont du dispositif d'écoulement (1, 2) étant formé un joint (9) avec lequel le chemin d'écoulement (11) peut être étanchéifié par rapport à l'extérieur au niveau d'une transition d'une sortie de robinet (12) au boîtier (3), ce joint (9) créant au niveau de la transition une surface intérieure (10) qui peut être mouillée par l'eau affluant dans le chemin d'écoulement (11), laquelle surface intérieure (10) est non caoutchoutée, le joint (9) possédant dans l'entrée de robinet (6) une saillie périphérique (13) qui forme sur un côté orienté vers le chemin d'écoulement (11) la surface intérieure non caoutchoutée (10), la saillie (13) étant formée sur le boîtier (3) et reliée d'une seule pièce avec celui-ci et la saillie (13) présentant une surface de contact orientée dans le sens contraire du vissage qui forme une butée pour la sortie de robinet vissée, **caractérisé en ce que** la saillie (13) délimite une rainure périphérique (15) dans la sortie de robinet (6) vers le chemin d'écoulement (11), cette rainure (15) étant ouverte à l'opposé d'une direction de vissage (20) prédéfinie par le filetage (7), qu'une bague en caoutchouc (16) est insérée dans la rainure périphérique (15), que cette bague en caoutchouc (16) sort de la rainure (15) à l'opposé d'une direction de vissage (20) à l'état détendu et/ou la rainure (15) est moins profonde que nécessaire pour recevoir intégralement la bague en caoutchouc (16), et que la rainure (15) est dimensionnée de telle sorte que la bague en caoutchouc (16) peut être reçue sans déborder dans un état comprimé.

2. Dispositif d'écoulement sanitaire (1, 2) selon la revendication 1, **caractérisé en ce que** la saillie (13) est fabriquée dans un matériau malléable.

3. Dispositif d'écoulement sanitaire (1, 2) selon une des revendications précédentes, **caractérisé en ce que** la saillie périphérique (13) dans l'entrée de robinet (6) est formée radialement à l'intérieur du filetage (7) et/ou espacée radialement du filetage (7).

4. Dispositif d'écoulement sanitaire (1, 2) selon une des revendications précédentes, **caractérisé en ce que** la saillie (13) est fabriquée en matière plastique.

5. Dispositif d'écoulement sanitaire (1, 2) selon une des revendications précédentes, **caractérisé en ce que** la saillie (13) présente un profil de section transversale s'effilant à l'opposé d'une direction de vissage (20) prédéfinie par le filetage (7).

6. Dispositif d'écoulement sanitaire (1, 2) selon une des revendications précédentes, **caractérisé en ce que** le filetage (7) permet de visser une sortie de robinet (12) au-delà d'une extrémité amont de la saillie (13) et/ou que la saillie (13) forme une butée pour le ou un vissage d'une sortie de robinet (12).

7. Dispositif d'écoulement sanitaire (1, 2) selon une des revendications précédentes, **caractérisé en ce que** la bague en caoutchouc (16) présente un profil de section transversale en faux-rond ou rond.

8. Dispositif d'écoulement sanitaire (1, 2) selon une des revendications précédentes, **caractérisé en ce qu'**un volume d'une ou de la rainure (15) dépasse un volume de la bague en caoutchouc (16).

9. Dispositif d'écoulement sanitaire (1, 2) selon une des revendications précédentes, **caractérisé en ce que** le boîtier (3) est fabriqué en métal au moins au niveau de l'entrée de robinet (6).

10. Dispositif d'écoulement sanitaire (1, 2) selon une des revendications précédentes, **caractérisé en ce que** le boîtier (3) se raccorde du côté aval à la surface intérieure non caoutchoutée (10) dans un logement de régulateur de jet (4) de forme évasée dans lequel un régulateur de jet (5) est inséré de façon amovible.

11. Dispositif d'écoulement sanitaire (1, 2) selon une des revendications précédentes, **caractérisé en ce que** le régulateur de jet (5) est déformé par le logement de régulateur de jet (4) au moins à son extrémité amont lorsqu'il est inséré et/ou que le régulateur de jet (5) comporte à son extrémité amont une lèvre d'étanchéité (17) appliquée sur le logement de régulateur de jet (4) et/ou une bague d'étanchéité (22) appliquée sur le logement de régulateur de jet (4).

12. Dispositif d'écoulement sanitaire (1, 2) selon une des revendications précédentes, **caractérisé en ce que** le régulateur de jet (5) est fabriqué en matière plastique.
